# EUROPEAN PATENT APPLICATION

(11) **EP 3 068 103 A1**
(43) Date of publication of application: **14.09.2016**
(21) Application number: 16168052.5
(22) Date of filing: 13.08.2013
(51) Int. Cl.: H04L 29/06, H04L 29/08

(54) **PROCESSING OF MULTIMEDIA DATA**

(30) Priority: 14.08.2012 US 201261682865 P
(62) Divisional of application: 13748061.2
(71) Applicant: Telefonaktiebolaget LM Ericsson (publ), 164 83 Stockholm (SE)
(72) Inventor: LOHMAR, Thorsten, 52072 Aachen (DE); GABIN, Frederic, 93170 Bagnolet (FR)
(74) Representative: von Zmuda-Trzebiatowski, Margarethe

(57) **Abstract**

The invention relates to techniques for providing media content to an adaptive HTTP streaming player. Upon reception of a HTTP request from the adaptive HTTP streaming player, like a DASH player, requesting the media content, a HTTP entity performs a procedure for determining a representation preference indication of the content being available on a fixed quality interface providing data with fixed data quality, which may provide data being for example received over a broadcast interface or being available in a cache. Said representation preference indication is signaled to the adaptive HTTP streaming player, which is adapted to use the representation preference indication for further requests. The adaptive HTTP streaming player is not aware whether the content is available on a fixed or unicast interface, but is forced with the solution to use the preferred representation being available on the fixed quality interface. Consequently, the adaptive HTTP streaming player stops to measure any changes in the link quality of the provided data on the unicast interface upon reception of the representation preference indication and requests data according to the representation preference indication.

## Description

### Technical Field

The present disclosure relates to techniques for providing multimedia services to a user. In particular, a technique is disclosed for transmitting a multimedia content to a DASH-player being an example of an adaptive HTTP streaming player.

The present solution may be practiced within network solutions using broadcast transmission techniques providing a transmission of media segments. In particular the solution may be used in scenarios using eMBMS transmission of media segment or other broadcast transmission techniques like IP-Multicast in DSL access system (IPTV). Further the present solution is applicable when serving media content from a cache.

### Background

DASH Dynamic adaptive streaming over HTTP is an adaptive streaming technique, which adjusts the media stream to the currently available link bitrates as disclosed in "Dynamic adaptive streaming over HTTP (DASH) - Part 1: Media presentation description and segment formats", ISO/IEC 23009-1:2012(E), Version 2.1c2.

The adaptive HTTP streaming techniques rely on the client selecting media quality. The server or content provider describes all available quality representations in a so called manifest file, for example the representations of the media content may differ regarding the different media bitrates and the way to access the representations from the server. The manifest file is fetched at least once at the beginning of a streaming session and may be updated during the session. The MPD comprises lists or means to generate the lists of the URIs of all media segments, which belong to the media session and which are used to fetch the next media segment. In case of Apple's HLS, the manifest is formatted as a Playlist file in m3u8 format. In case of 3GPP/ MPEG DASH, the manifest is an XML structure called MPD Media Presentation Description.

DASH is designed as a client controlled adaptive HTTP streaming protocol. That means, that the server describes a set of available media qualities for example in an MPD and the client selects depending on the link bitrate the media representation (i.e. media bitrate) matching the link bitrate. In general the DASH solution comprises a DASH server being adapted to provide content with different media qualities, so called representations and on the client side a DASH client is adapted to request the media content with different qualities.

Most of the adaptive HTTP Streaming techniques require a client to continuously fetch media segments from a server. A certain amount of media time (e.g. 10sec of media data) is contained in the media segment. Each segment of a particular media representation is made available at the server at a particular time indicated in the manifest. The way of creation of the URIs on the client side for downloading the segments of the different quality representation is described in the manifest.

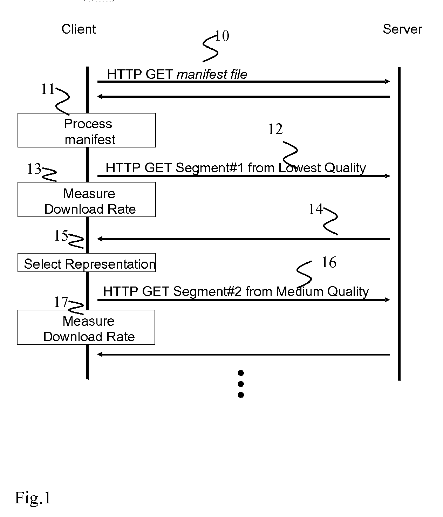

Fig.1 depicts the principle of segments fetching in a DASH environment. The client, a DASH client communicates with a server, a DASH server.

The manifest file is received as an answer of the HTTP GET manifest file message, 10, and processed to determine the possible qualities, 11. In the next step, 12, the client requests data at lowest quality, HTTP GET Segment#1 from Lowest Quality and a measurement of the downloading rate is performed, 13. The client continuously measures the link bitrate while receiving the media segments, 14, to determine the appropriate quality for the reception of the content data. The client may change to another quality representation at any time, if a decision is taken to change the representation, 15. In the embodiment according to Fig.1 it is decided to request media data with a medium quality, HTTP GET Segment#2 from Medium Quality, 16, and to continue the measurement of the download rate, 17.

Currently, it is also possible to deliver DASH media segments over broadcast systems such as eMBMS (LTE Multimedia Broadcast Multicast Service). Broadcast is efficient, when all users in a cell or any broadcast area use the same bitstream quality. That means, that typically only a single quality representation is broadcasted in an area and the client in said area selects that particular quality.

Thus, typically only a single representation is broadcasted into a particular target area and the same content stream is broadcasted in different broadcast areas with different bitrate constraints or in other words with different representations. Thus, it is possible that the same service is broadcasted for example in urban areas at a higher bitrate and with a lower bitrate in sub-urban areas.

The DASH player may receive content via broadcast or unicast. However a DASH Player has no information, whether the phone is within broadcast and/or unicast coverage.

In the broadcast scenario, a media segment must be first received by the eMBMS client, before it can be made available to the DASH player. This is a penalty for broadcasted representations over unicast representations. The DASH player may accept the additional delay when tuning in first to a broadcast DASH session. However, the DASH player does not know, whether or not the UE is within broadcast coverage. Thus, if the phone is not in broadcast coverage, then the DASH player first need to wait this additional delay for broadcast start-up just to find out that broadcast reception is not possible.

Further, because the client does not know whether it is receiving representations from broadcast or unicast, it measures downloading rate in the same way for both receptions. In the case where a medium quality representation is being broadcasted, the client observing a good downloading rate may decide to switch to a higher quality representation being not broadcasted. Once the client has switched, segments are necessarily retrieved over unicast, then it may experience a very low downloading rate of that high quality representation hence Quality of Experience as well as the network load are being negatively impacted.

The occurring delays for example due to the performed measurements or due to the reception of the broadcasted data lead to reduced Quality of Experience (QoE) on the user side, then from the QoE perspective, the start-up of a video at the client side is to be performed possible fast.

### Summary

There is a demand for a technique for an efficient provision of media data to a user. In particular there is a demand to increase the experience level of the presented data.

The invention is embodied in independent claims. Advantageous embodiments are described in the dependent claims.

The demand is satisfied with a method for providing media content to an adaptive HTTP streaming player. The method comprises the step of receiving a HTTP request from the adaptive HTTP streaming player requesting the media content. In the next step, the media content as content being available on a fixed quality interface (S22), is identified and then a representation preference indication of the content provided on the fixed quality interface is determined. The determined representation preference indication is signaled to the adaptive HTTP streaming player.

Further the demand is satisfied with a method for providing media content being realized in an adaptive HTTP streaming player. Said HTTP streaming player sends a HTTP request to a HTTP entity for provision of the media content. As an answer to the request, the adaptive HTTP streaming player receives from the HTTP entity a representation preference indication of the media content provided on a fixed quality interface. As next, the received representation preference indication is used to request media content being provided on the fixed quality interface.

In one implementation a HTTP entity device adapted to provide media content to an adaptive HTTP streaming player is proposed. Said HTTP entity device comprises a receiver adapted to receive a HTTP request from the HTTP streaming player requesting the media content. Further there is an identifier adapted to identify the media content as content being provided on a fixed quality interface. Further the HTTP entity device comprises a processor adapted to determine a representation preference indication of the media content provided on the fixed quality interface and a sender adapted to signal the representation preference indication to the HTTP streaming player.

In a further embodiment, an adaptive HTTP streaming player device adapted to provide media content is provided. Said HTTP streaming player device comprises a sender adapted to send a HTTP request for provision of media content to a HTTP entity. Further there is a receiver adapted to receive a representation preference indication from the HTTP entity for reception of the media content being provided on the fixed quality interface and a processor adapted to use the received representation preference indication for requesting the media content being provided on the fixed quality interface.

In a further embodiment a client device adapted to provide media content is proposed which comprises an adaptive HTTP streaming player device and a HTTP entity.

Further the device nodes are adapted to perform all steps as claimed in connection with the corresponding method which is to be performed in the corresponding node.

### Brief Description of the Drawings

In the following, the invention will further be described with reference to exemplary embodiments illustrated in the figures, in which:
Fig. 1 shows an embodiment for fetching segments on an adaptive HTTP streaming client
Fig. 2 shows a flowchart of a method in a proxy entity according to one embodiment
Fig. 3 shows a flowchart of a method in an adaptive HTTP streaming player according to one embodiment
Fig. 4 schematically shows a proxy entity according to one embodiment
Fig. 5 schematically shows an adaptive HTTP streaming player according to one embodiment
Fig. 6 shows a system of a method according to one embodiment
Fig.7 schematically shows a system according to an embodiment
Fig.8 schematically shows a system according to an embodiment
Fig.9 schematically shows a system according to an embodiment
Fig.10 schematically shows a system according to an embodiment
Fig.11 schematically shows a message exchange according to an embodiment.

### Detailed Description

In the following description, for purposes of explanation and not limitation, specific details are set forth, such as particular network environments and communication standards etc., in order to provide a thorough understanding of the current invention. It will be apparent to one skilled in the art that the current invention may be practiced in other embodiments that depart from these specific details. For example, the skilled artisan will appreciate that the current invention may be practised with any wireless network like for example UMTS, GSM or LTE networks. As another example, the invention may also be implemented in short-range wireless networks such as WLAN or Blue-tooth systems or in wireline networks, for example in any IP-based networks, like IMS network.

The invention may be practiced with certain (TV) broadcast networks or with hybrid networks comprising a (TV) broadcast network and a mobile network, for example a DVB-H (Digital Video Broadcast-Handhelds) and a 3GPP mobile network. Basically, the invention may be practiced within any network environment in which video content may be distributed.

The media data may comprise video data, audio data, or any other kind of (multi)media data, such as, for example, a combination of video and audio data. The content may be provided within the framework of a multimedia service such as a mobile TV or IPTV service. In the following the term multimedia data, content, content data are used as synonyms. In general it may be said that media segments contains media data in form of a sequence of media segments for example of a video clip.

The HTTP entity might be any device providing the proxy functionality, like a HTTP proxy, HTTP server, HTTP proxy caches etc, wherein the terms are used in the following description alternatively. In the following if the term HTTP is used it is not to be seen as any limitation but as a possible embodiment of the proxy entity. Further in the following the term extended HTTP proxy or server is used as an embodiment of the HTTP entity. The HTTP entity is extended by the functionality according to the present description.

A HTTP streaming player is a player on the client side adapted to provide the received streaming data to the user. In one embodiment it is proposed that the HTTP streaming player is a DASH player, in particular an MPEG-DASH player. Preferably the HTTP streaming player is an adaptive HTTP streaming player being arranged to adapt the reception rate of media data or media content to the available radio link rate. Therefore, the adaptive client performs the measurements about the radio quality in order to find out the best matching transmission bit rate for the available data quality.

Other adaptive HTTP streaming schemes such as Apple HTTP Live Streaming may be supported as well.

The client might be any end device or user equipment. In one embodiment the client comprises an adaptive HTTP streaming player, like a DASH player and a HTTP entity, and both are located in the same device, like for example in a mobile equipment. In other embodiment it is proposed that the HTTP streaming player and the HTTP entity are deployed in separate devices. The HTTP streaming player may be located in the mobile environment and the HTTP entity in a separate proxy entity, placed for example in a (home) gateway.

A fixed quality interface may be any interface providing data with a fixed data quality. In one embodiment it is proposed to provide data being broadcasted for example over eMBMS. In a further embodiment the data is stored with a preferred quality in a cache. In contradiction to the unicast interface there are no changes in respect to the quality or representation of the media content during the reception of said data. Thus, it is proposed that when the terminal is within the coverage of a broadcast transmission or when the requested data is cached, then the adaptive HTTP streaming player consumes the segments of the broadcast or cache representation and does not need to perform regularly the measurements, whether to change to other representation as it is the case when receiving media data being available on the unicast interface. Thus, the fixed quality interface means that the client does not decide on the quality, but the network provides segments at a given, fixed quality, or the segments are available from the cache being received for example from other streaming sessions, and being available with a fixed quality.

Summarizing, it is proposed that that in certain scenarios, the DASH Player should use only a certain subset of the offered and preferred representations. For instance, when the DASH player on a mobile phone is within mobile broadcast coverage, then the DASH player shall prefer the broadcasted representation (typically only a single quality) since using other representation would force the usage of media data being available on the unicast interface characterised by the fact that representations of the data changes during the data transmission, leading to unnecessary measurements and transmissions over the unicast interface.

In case of broadcast as an embodiment for provision of media data being sent with a fixed data quality, it is proposed that the client should not change the media representation, but the client should consume the media quality, which is broadcasted in the current area. Herein it is to be mentioned that it is possible that the client receives different quality representations depending on the area. The eventually used representation may namely depend on the geographical location of the user equipment for example whether or not broadcast reception is possible and which representation to use for broadcast.

The IETF FLUTE protocol (RFC 3926) is used for file delivery over a broadcast transmission. The FLUTE delivery session is defined by an SDP Session Description Protocol file, which contains parameters necessary for the delivery of a broadcasted content, such as IP Multicast address, the IP version (IPv6 or IPv4), the reception UDP port, the protocol for example FLUTE, the sender IP address and also Temporary Mobile Group Identity TMGI for MBMS to allow a client to receive a mobile file broadcast delivery.

When new services and application are provided then the corresponding Service Announcement attributes and description files are generated, like a user service description (USD) or the corresponding session description protocol (SDP) or the corresponding Media Presentation Description (MPD). The USD file is a parent fragment for the SDP and MPD, which contains additional service parameters for MBMS User Services (3GPP TS 26.346 Rel-11).

DASH is a protocol used for provision of multimedia data. Said data may be provided over the FLUTE in case of broadcast transmission. The DASH protocol defines an MPD file which comprises the segment URIs (or generally information on how to request segments) of the media content which are to be requested and provided to the DASH player.

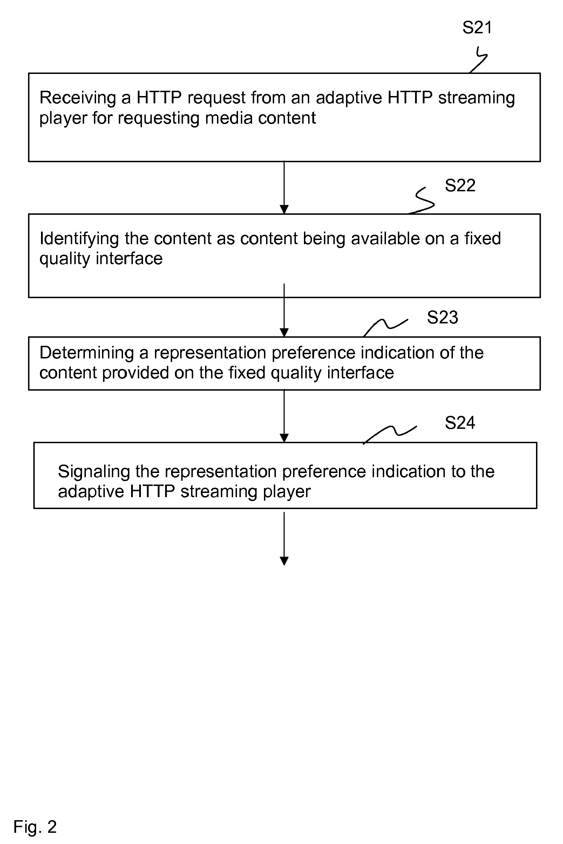

In the following an embodiment of the present invention is presented in respect to Fig. 2 showing a flow chart with steps to be performed at a HTTP entity.

In step S21, the HTTP entity receives a HTTP request for provision of media content. Said request is received from an adaptive HTTP streaming player. Each HTTP request comprises a media segment URI for fetching the subsequent media segments.

In step S22, the HTTP entity identifies the content the adaptive HTTP streaming player is requesting as content being available on a fixed quality interface. This may be realized in any suitable and preferable way.

In one embodiment it is proposed to check the available Service Announcement fragments (incl. SDP files) in the HTTP entity to find a SDP file corresponding to the media segment being received with the HTTP request. The media segment URI in the request may correspond to an ongoing eMBMS session, described by its USD and corresponding SDP and MPD.

Herein it is to be noted that eMBMS uses IP Multicast for transport of data. The eMBMS protocols are defined for a mobile environment. However for a scenario with a fixed connection, the receiver receives only a FLUTE over an IP Multicast stream. Then, likely only a SDP file is provided with the service announcement, which contains the needed parameters to receive the IP Multicast stream.

The request URI in the HTTP request changes with each segment and each representation. The URI differs from request to request, then the URIs include different segment numbers, which change due to the running index of the segments, also the URIs can have different quality representations. It is proposed that the HTTP entity derives from the received URI the corresponding SDP. A corresponding association to the available Service Announcement files is performed (for example a check, whether the received HTTP requested URI can be generated from any available MPD) in order to find out whether the session being characterized by the SDP is available on the fixed interface.

In one embodiment, preferably when the HTTP proxy and the adaptive HTTP streaming player are located in a the same client device, it is proposed that the HTTP entity receives both the MPD file and the SDP file at the beginning of a session, for example with Service Announcement. The Service Announcement provides also the association between said MPD file and the SDP file. The HTTP entity gets the MPD, which is linked with the SDP for MBMS services. Thus upon reception of an HTTP request, the HTTP entity checks based on the received URI whether a corresponding MPD is available and then to find in the next step the corresponding SDP.

In a further embodiment the HTTP request may include a content identifier for the corresponding SDP file. This solution may be preferred when the HTTP entity is located in a separate node for example in a gateway. The content identifier may be contained in or derived from the MPD file. For example the content identifier may be included in the provided MPD message at the beginning of the session and is to be used by requesting further media segments additionally to the URI. The content identifier may be the MPD @ Id field as defined in TS 26.247 Rel-11. In this case the client signals explicitly the content identifier for the associated SDP file in the HTTP.

The DASH player may add a particular content identifier as HTTP header to each HTTP Request. It is proposed that the content identifier is an unique indication for the content within the scope in which the Media Presentation is published and said identifier stays unchanged during the media session. In contrary thereto, the request URI in the HTTP request changes with each segment and each representation. The content identifier allows the HTTP entity to find in an efficient way for alternative reception possibilities of that content likely at different quality. The advantage of this embodiment is that the media content to be provided may be fast recognized by the HTTP proxy by checking the HTTP header for the content identifier so that the HTTP entity does not need to search at first the corresponding SDP.

Thus, it is proposed that the HTTP entity looks up which SDP file is associated with the content identifier to identify the content as content being available on the fixed interface by checking the SDP, USD or MPD (i.e. Service Announcement Fragments).

In a further embodiment it is proposed that the HTTP entity may first need to download the needed corresponding SDP file (potentially with other service announcement files) from a server based on the information from the HTTP request. The HTTP entity may find the SDP file (and other fragments for reception activation) based on the content identifier or alternatively based on the URI, so that the HTTP Proxy may download the needed files, like SDP or USD from the server.

In an embodiment it is proposed to check whether a provision of the content data over a fixed quality interface is possible. The eventually used representation may namely depend on the geographical location of the user equipment for example whether or not broadcast reception is possible and which representation to use for broadcast. The checking step may comprise checking whether a reception eMBMS in the current position is possible. Depending on the device and the position of the end device it is namely not always possible to receive MBMS data. Further the step may comprise a checking whether a reception of a IP Multicast stream is possible. The SDP file describes the IP Multicast address and the UDP port for FLUTE. Hence, if there is an active UDP port for the FLUTE being described together with the IP Multicast address, then the reception of the content data over the IP Multicast link is possible and is to be preferred.

In a further embodiment the step of identifying comprises determining whether the media content with a fixed quality is available in a cache. It is proposed that if the data is in a cache, the HTTP entity takes the available data having a fixed quality to use said quality as preferred quality for requesting data. The HTTP entity may find the segments in cache, either by matching the URIs or by matching a content identifier.

In step S23, the HTTP entity determines a representation preference indication of the content provided on the fixed quality interface. This may be realized in any suitable and preferably way. In one embodiment it is proposed to derive the representation preference indication from the SDP file. In cases, in which the HTTP entity has access to the SDP file, the HTTP entity may prefer to take the SDP file to derive the representation preference indicator. The SDP file may include an indication about the used quality for data transmission.

Alternatively, the HTTP entity may find the value of the representation preference indicator as parameter in the SDP file contained in the MBMS User Service Description or in a corresponding IP multicast service, meaning that the parameter of the SDP file shall be added as value, in one of the SDP parameters described in the FLUTE session for content reception. When the eMBMS USD describes the MPD, it contains also the representation being broadcasted, hence it is easy to derive the preferred representations.

In a further embodiment HTTP entity may have access to the MPD of the used media content. This is than the case, when the HTTP entity has a direct association between an MPD file and SDP file. In this case it is proposed to derive the value of the representation preference indicator from the MPD, which includes the representation indicator.

Further the determination step comprises the determination of the appropriate presentation of the representation preference indication. It may be preferably done in the determination S23 step but it can be also performed at any appropriate stage before siignalling in S24. The indication may be formatted in any suitable and preferably way. In one embodiment it is proposed to use a digit numbers or a string representation for the indication of quality. Further the indication might be a subset of a number of preference indications. For example in case of video the indication of data quality may be different then for audio data.

In step S24, the determined representation preference indication is signaled to the HTTP streaming player for letting the adaptive HTTP Streaming player stop its measurements and request content segments, available through the fixed quality interface.

Optionally, the proxy 702 provides a HTTP response error message with a 404-file-not-found error header, when the proxy does not want to use unicast at all.

In the following procedure, the sub-sequent requests for segments provided through fixed quality interface are received and provided to the HTTP streaming player in a response.

The representation preference indicator may be provided in any suitable and preferably way. In one embodiment it is proposed to provide the indication as HTTP header in the HTTP response, wherein in the header a certain representation or representation subset is comprised. The HTTP entity may add this to any subsequent responses. The representation preference indicator may point to one or more representations. In case audio and video are provided as separate representations then the representation-preference-indication may point directly or indirectly to both representations.

Instead of pointing to representations, the preference indicator may point to adaptation-sets, which contain one or more representations, forming a so-called adaptation-set-preference-indicator. From the procedure perspective, there is no difference whether a representation or an adaptation-set is indicated.

In a further embodiment it is proposed that the representation identifier is unique within a period unless the representation is functionally identically to another representation in the same period. Hence, the representation preference indicator may change from one period of transmission to another, wherein the period is defined in the manifest file. Preferably, the HTTP entity should add a representation preference indicator to each response message.

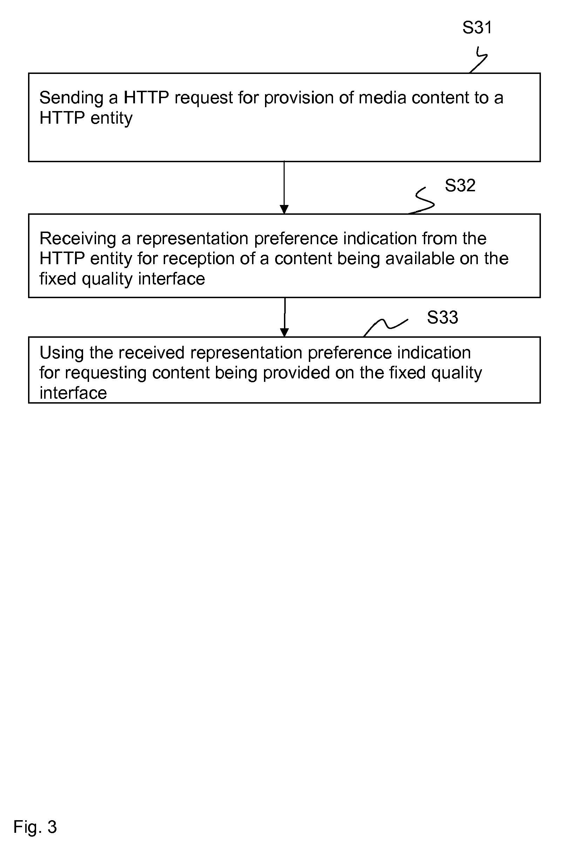

In the following an embodiment of the present invention is presented in respect to Fig. 3 showing a flow chart with steps to be performed at an adaptive HTTP streaming player.

In step S31, the HTTP streaming player sends a HTTP request for provision of media content towards the HTTP entity.

Thus, in a preferred solution the HTTP request comprises a request according to the received MPD file, in particular a URI for the next media segment. The MPD file with the MPD segments URIs is provided to the HTTP streaming player, in case of a broadcast transmission said MPD file is broadcasted and in case of unicast connection it is provided as a response to a corresponding previously sent request.

In step S32, the HTTP streaming player receives a representation preference indication from the HTTP entity for reception of a content being provided on the fixed quality interface.

The representation preference indication is added to each HTTP response and it may change during an on-going streaming session. For instance the phone may move into or out of the broadcast coverage, thus, broadcast reception may become possible or impossible during the session. Also, the broadcast transmission may be started at any time or stopped. Thus, the HTTP streaming player should continuously check the received representation preference indication in HTTP responses.

In step S33, the received representation preference indication is used for requesting content. The representation has been determined as being a preferred representation and the client is instructed to switch to the alternative representation, which is available on the fixed quality interface. Consequently, the HTTP streaming player stops to measure any changes in the link quality of the provided data on the unicast interface upon reception of the representation preference indication.

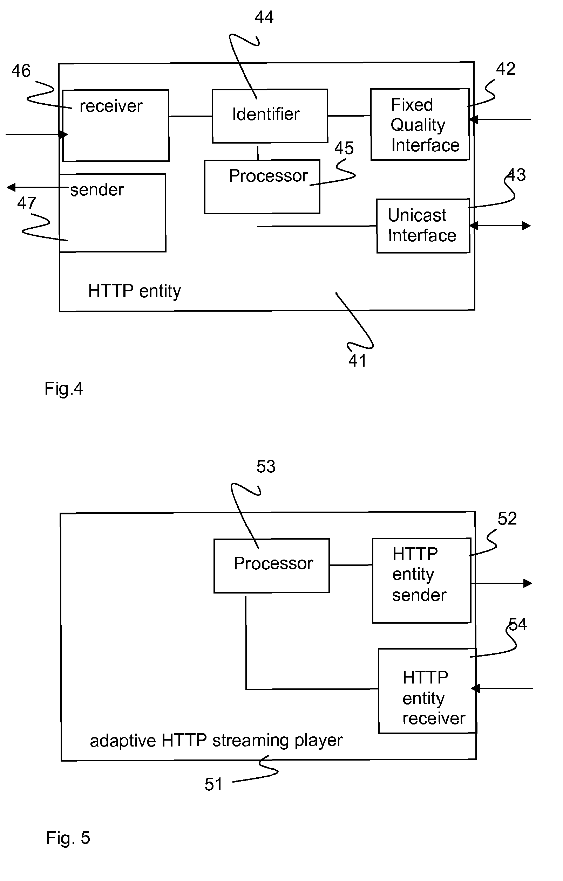

Fig. 4 schematically illustrates exemplary structures for implementing the above-described concepts in a HTTP entity 41. The HTTP entity 41 is configured for providing multimedia data or media content with a fixed data quality to the HTTP streaming player. The HTTP entity 41 comprises a fixed quality interface 42 for receiving data with a fixed data quality. In a preferred embodiment said interface is a broadcast interface adapted to receive media segments over broadcast or IP multicast. However the fixed quality interface is also adapted to provide data being available in a cache. Further there is a unicast interface 43 for receiving data over unicast connection with variable data quality changing during the data provision adapted to fetch media content from a unicast HTTP server.

The HTTP entity comprises a receiver 46 adapted to receive a HTTP request from an HTTP streaming player for provision of media content. Further the HTTP entity comprises an identifier 44 adapted to identify the content the HTTP streaming player is requesting as content being provided on a fixed quality interface. Further the HTTP entity comprises a processor 45 adapted to determine a representation preference indication of the content provided on the fixed quality interface. Further the processor is adapted to identify the content as being available on the unicast interface and as being to be preferred.

The HTTP entity comprises a sender 47 adapted to respond to HTTP request from the HTTP streaming player for provision of media content and signal the representation preference indication to the HTTP streaming player.

Fig. 5 schematically illustrates exemplary structures for implementing the above-described concepts in an adaptive HTTP streaming player 51. Said HTTP streaming player is configured to present to a user the multimedia data or media content being received. The HTTP streaming player comprises a HTTP entity sender 52 adapted to send a HTTP request to a HTTP entity for provision of media content. Further the HTTP streaming player comprises a HTTP entity receiver 53 adapted to receive a representation preference indication from the HTTP entity for reception of a content being provided on the fixed quality interface. Further the HTTP streaming player comprises a processor 54 adapted to use the received representation preference indication for requesting content and subsequently control the link rate measurements. The HTTP streaming player is not aware whether the content is available on a fixed or unicast interface, it uses however the received representation preference indication for further requests.

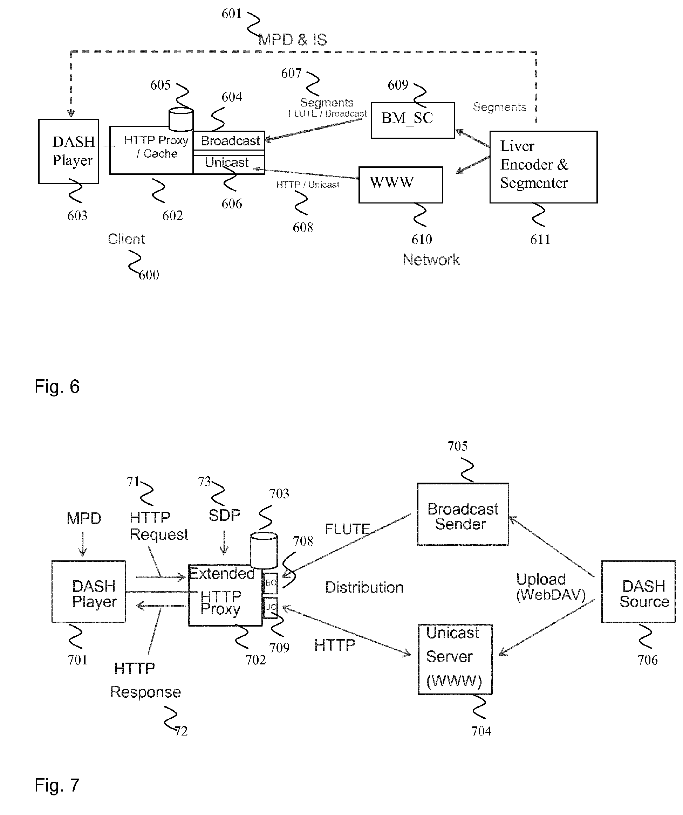

Fig.6 depicts an embodiment showing a system applying an embodiment of the present invention.

According to Fig.6 it is proposed that the client, 600, which processes the received DASH MPD, 601, is subdivided into a HTTP Proxy/cache (the HTTP entity), 602 and a generic DASH player (the HTTP streaming player), 603. The DASH Player receives an MPD, describing a DASH media stream. The MPD may be received via unicast, via a service announcement channel like for example Electronic Service Guide (ESG) on broadcast or any other mean. The DASH Player processes the MPD and selects a first representation according to the MPD define ranking. The broadcast receiver, 604 (part of the HTTP proxy) handles broadcast protocols such as FLUTE and takes care about receiving broadcasted segments, 607. The HTTP proxy/cache, 602 may also implement a segment cache, 605. The cache, 605, uses the broadcast receiver as a segment source or may use unicast, when the broadcast receiver does not provide any segments. The unicast receiver, 606, (part of the HTTP proxy) handles unicast protocols such as HTTP/Unicast and takes care about receiving unicast segments, 608. The broadcast segments are provided by the BM-SC, 609 and the unicast segments by the WWW web server, 610. The segments as such are generated by the Live encoder and segmenter, 611.

Fig.7 depicts an architecture deploying an embodiment of the present invention.

The architecture in the embodiment of Fig.7 comprises a DASH player, 701. The DASH player 701 processes the manifest file MPD and is adapted to request media segments of a certain representation using HTTP GET or generally said HTTP request, 71. An extended HTTP Proxy 702, which is an example of a HTTP entity, responds to the requests by providing a media segment of the requested quality representation in the HTTP response, 72. The extended HTTP proxy 702 has a clear preference of a certain audio and video representations for example as sub set of representations. The preferences are preferably established according to the way of reception. The extended HTTP proxy may either receive the content via broadcast, from the broadcast server 705 or it may serve the content from cache 703. In these cases, if a content is either available via broadcast or from the cache, said content is to be preferred. Thus in these cases, the extended HTTP Proxy 702 adds a new indication, for example as HTTP header to the HTTP response, 72, which indicates a certain sub-set of representations. Said indication is to be determined for example from the SDP file, 73. When the DASH Player 701 receives a preference indication with the HTTP response, then the DASH Player may change its own quality adaptation algorithm and remain on the preferred representation, even if a higher quality seems possible. For instance, the MPD describes three different quality representations, Low-Quality (LQ), Medium Quality (MQ) and High Quality (HQ). The DASH player 701 decides to request the LQ representation and sends an HTTP Request 71 with a LQ representation URI to the proxy. The extended HTTP proxy 702 has a clear preference for the Medium Quality (MQ) as medium quality is offered via broadcast. So, the proxy 702 responds to the HTTP request with the LQ segment and adds an indication to prefer the MQ representation to the HTTP response, 72. Optionally, the proxy 702 provides an HTTP response error message with a 404-file-not-found error header, when the proxy does not want to use unicast at all.

The HTTP Proxy 702 may have a cache 703, a broadcast reception interface, 708 and a unicast reception interface 709. A Broadcast Sender 705 uses the IETF FLUTE protocol to send media segments over broadcast, for example IP Multicast or eMBMS may be used for the point-to-multipoint distribution. If unicast is used, then the media segments are fetched using HTTP protocol from a Unicast Server WWW, 704.

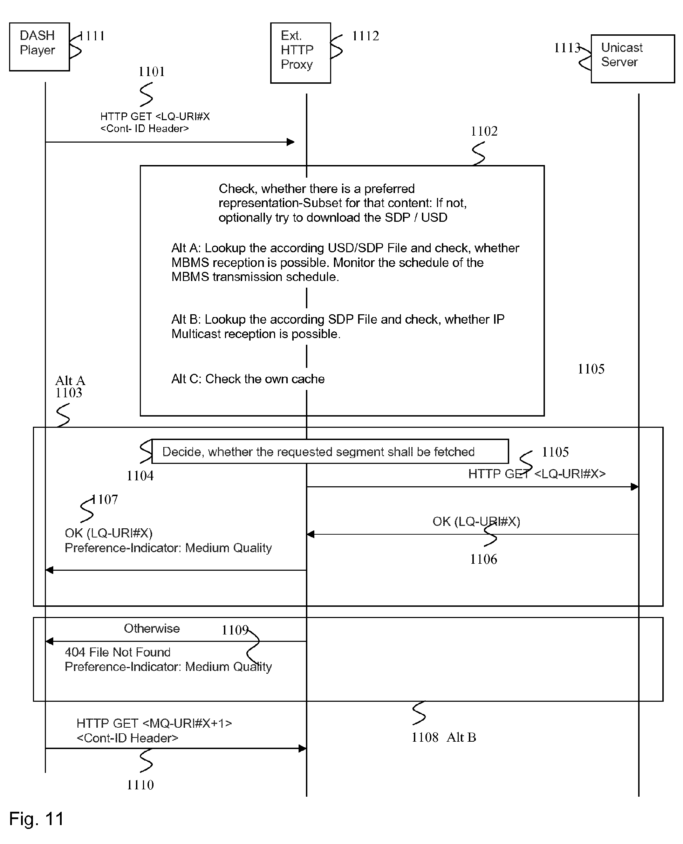

A DASH Source 706 provides the DASH media content in form of media segments to the Broadcast Sender 705 and Unicast Server 704. In Fig. 11 the Upload / WebDAV is depicted as an example for content provisioning.

The Broadcast Sender 705 offers only a subset, for example the medium quality representation for broadcast. The unicast server offers a larger range of quality representations (e.g. LQ, MQ and HQ). The representation preference indication is added to each HTTP response, 72 and it may change during an on-going streaming session. For instance the phone may move into or out of the broadcast coverage, thus, broadcast reception may become possible or impossible during the session. Also, the broadcast transmission may be started at any time or stopped. Thus, the DASH player should continuously check the presence and the value of the representation preference indicator in HTTP responses.

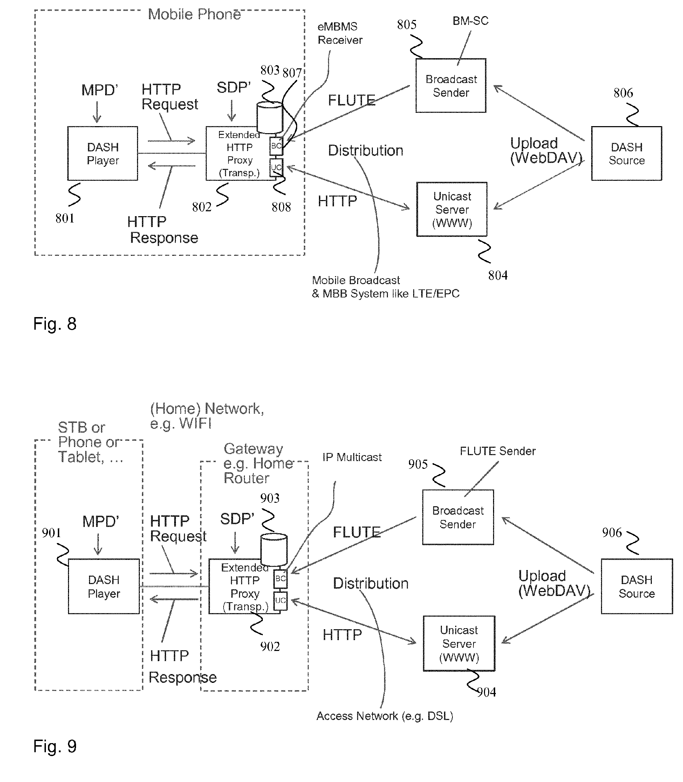

In the following an embodiment of an architecture implementing the present invention is presented in respect to Fig. 8.

According thereto, it is proposed that the HTTP entity 802 and the DASH Player 801 are deployed on the same device such as a mobile phone 800. HTTP protocol (HTTP Request, HTTP response in Fig.8) is used over the local loop interface between the DASH Player 801 and the extended HTTP proxy 802. The extended HTTP proxy 802 may receive broadcast via a broadcast interface 807 for example using eMBMS. Unicast is to be received over a unicast interface 808. It is further proposed that both interfaces may be realized within the same modem or device.

The remaining procedure is similar to the procedure described in relation to Fig. 6 and Fig.7. In particular, the 3GPP BM-SC 805 acts as Broadcast Sender 805 and distributes the media segment using the FLUTE protocol for example by applying in this embodiment a mobile broadcast and MBB system like LTE / EPC system which may be based on an eMBMS. In case a unicast is used, then the media segments are fetched using HTTP protocol from a Unicast HTTP Server (WWW), 804. A DASH Source 806 provides the DASH media segments to the Broadcast Sender 805 and Unicast Server 804. Further, there may be a cache, 803, providing data with fixed quality.

In a further embodiment, according to Fig.9, the DASH Player 901 and the extended HTTP Proxy 902 are deployed in separate devices. For instance the DASH player 901 may be located on a Set-to-Box (STB) or phone or tablet or any other appropriate device. The extended HTTP Proxy 902 may be deployed on a (Home) Gateway like a Home Router or a 3GPP-Wifi-Gateway or Network Attached Storage (NAS). Further it is proposed to place the HTTP entity in a content delivery network or content distribution network (CDN) server or proxy serving the delivery of content to the large number of end-users.

In the embodiment in respect to Fig. 9 the STB may communicate with the HTTP entity located in a Gateway via any appropriate connection, like a (Home) Network using for example Wifi or cable or any appropriate network supporting the HTTP protocol. The Gateway may receive DASH media segments either using IP Multicast or via unicast. The HTTP Proxy in the Gateway expresses a preference to the DASH player to prefer those media segments, which are received using IP Multicast from the access network like for example the DSL network if the gateway is connected to the access network using a DSL connection.

The remaining procedure is similar to the procedure described in relation to Fig. 6 and Fig.7. In particular, a Broadcast Sender 905 distributes the media segment using the FLUTE protocol by applying for example an IP Multicast, which is used in IPTV environment by transmitting multicast data over fix connection. In case of unicast, the media segments are fetched using HTTP protocol from a Unicast Server (WWW), 904. A DASH Source 906 provides the DASH media segments to the Broadcast Sender 905 and Unicast Server 904.

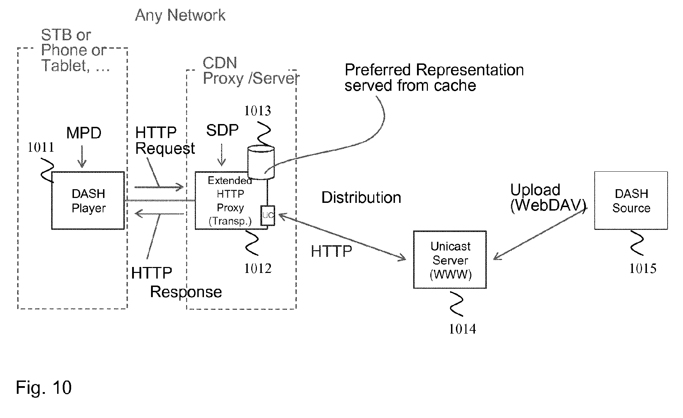

In a further embodiment according to Fig.10, the representation preference indication is provided by an extended HTTP Proxy entity 1011, which has already a certain quality representation in a cache 1013. Thus, the data is provided in a fixed data quality. In other words the preferred representation is the representation, which is served from the cache 1013. By expressing the preference, the cache 1013 increases the re-use rate of the cached content since the DASH players use requests for the cached segments. In other words, if the cache has one representation from an earlier streaming session in cache and a further client requests to fetch another quality of the content, then the HTTP entity instructs the client to use the quality, which is already in cache as the preferred one.

Broadcast reception may not be used in that embodiment since no broadcast data are receivable due to a missing broadcast interface.

In the embodiment according to Fig.10 the DASH Player 1011 and the extended HTTP Proxy 1012 are located in separate node. However the similar handling is proposed in case both entities are located in the same node.

In case of unicast, the media segments are fetched using HTTP protocol from a Unicast Server (WWW), 1014. A DASH Source 1015 provides the DASH media segments to said Unicast Server 1014.

In the following a further embodiment according to Fig.11 is described.

Fig.11 depicts exchange of messages between a DASH player 1111, extended HTTP Proxy 1112 and a Unicast Server 1113.

In step 1101 the DASH Player receives a MPD file, describing a DASH media stream. The MPD may be received via unicast, via a service announcement channel (aka Electronic Service Guide (ESG)) on broadcast or any other mean. The DASH Player processes the MPD and selects a first representation according to the MPD defined ranking. The DASH Player starts fetching a first media segment. The URI <LQ-URI#X> is an example of URI, where #X is typically an integer number indicating the number of the requested segments.

The DASH Player may add a content identifier, "Content-ID" HTTP Header to the request in order to facilitate the assignment of the request to a corresponding SDP, while determining alternative reception possibilities. However the header is optional and may be omitted, for example the extended HTTP Proxy may identify the SDP file for the media stream based on the segment URI, <LQ-URI#X>, which is derived from the MPD file.

In step 1102, the extended HTTP Proxy receives the HTTP request and determines a preferred representation.

In one embodiment, if the extended HTTP Proxy does not have the SDP file, it may try to fetch the needed SDP files or any other appropriate file like USD file from the network. This may be based on information received with the HTTP request from the DASH player.

In an other embodiment, 1102 Alt A, if the extended HTTP proxy is deployed on a eMBMS capable device, then the extended HTTP proxy looks up the SDP file in its own structure and checks, whether it can receive eMBMS in the current position. Depending on the device and the position of the end device it is namely not always possible to receive MBMS data. Usually the device needs to activate the reception of the MBMS in its own chipset to see, whether the stream is receivable. If eMBMS reception is possible, then the extended HTTP proxy tries to find the SDP-described MBMS bearer. This is done by checking the availability of the Temporary Mobile Group Identity TMGI on the MCCH channel. The TMGI uniquely identifies an MBMS (Multimedia Broadcast / Multicast Service) Bearer Service. A single globally unique TMGI is allocated by the BM-SC (Broadcast Multicast - Service Center) per MBMS bearer service. The control plane information on MCCH is MBMS specific and is sent to UEs in a cell with an activated (joined) MBMS service. Hence, if the HTTP entity finds a TMGI belonging to the SDP, then it has the knowledge that using the SDP a broadcast reception is possible.

In a further embodiment 1102 Alt B if the extended HTTP proxy or server is deployed on a Gateway like a home gateway, then in this case the extended HTTP proxy looks up the SDP file in its own structure and checks, whether it can receive the IP Multicast stream. The SDP file describes the IP Multicast address and the UDP port for FLUTE. The content may be multicasted in a DSL access network as described above. Hence, if there is an active UDP port for the FLUTE being described together with the IP Multicast address, then the reception of the content data over the IP Multicast link is possible and is to be preferred.

Thus based on the received HTTP request, which may comprise either information derived from the MPD file or a content identifier a corresponding SDP file is determined and in the following step it is checked whether data with a fixed quality, for example received over broadcast or IP multicast is receivable and possible.

In a further embodiment, 1102 Alt C, it is proposed that if the extended HTTP proxy/server is deployed on any Gateway or router, the extended HTTP proxy looks whether content of the requested media stream is in its own cache. In this case said data is taken as to be preferred for providing.

In step 1103, Alt A, the extended HTTP proxy fetches the requested resource from an originating server 1104 according to the, from the Dash Player received, URI and forwards it to said DASH Player. In the embodiment according to Fig.11 the DASH player requested a LQ low quality, step 1101 HTTP GET <LQ-URI#X <Cont- ID Header>. As a result of the request, the extended HTTP proxy requests a corresponding media segments from the Unicast Server, 1113, by sending HTTP GET <LQ-URI#X>, 1105. Subsequently, the extended HTTP proxy receives the data with a Low Quality, OK(LQ-URI#X), 1106. As next the DASH player receives also the LQ Low Quality form the extended HTTP proxy, OK (LQ-URI#X) 1107 . Additionally, a representation preference indicator, in this case a Preference-Indicator: Medium Quality is additionally enclosed. Thus, if the proxy can receive content via IP Multicast or Broadcast, then the extended HTTP proxy adds a representation-preference indication to the response, OK (LQ-URI#X) Preference-Indicator: Medium Quality. The extended HTTP Proxy may add this to any subsequent responses.

In step 1108, Alt B, it is proposed that if the extended HTTP proxy does not want to fetch the requested resource using unicast, then the ext HTTP proxy responds with a "404 file not found" error message and adds the representation-preference-indicator to the error message, in this case also a Preference-Indicator: Medium Quality, 1109. With this solution the DASH Player is forced to use the preferred representation, in this case medium

In a further alternative embodiment, not depicted in Fig.11, the extended HTTP proxy may have the requested segment in cache and provides the requested segment with the representation-preference to the DASH Player, 1111.

In step 1110 of Fig.11, the DASH Player requests subsequent segments according to the representation preference indicator so that the extended HTTP Proxy can serve the preference representation. In a preferred solution it is proposed that the DASH player stops using unicast for media stream fetching when the device is in a broadcast coverage. The extended HTTP proxy continuously adds the representation preference indicator to the messages being sent to the DASH player. For this purpose the extended HTTP Proxy continuously monitors, whether the reception condition for IP Multicast or broadcast reception changes.

In an IP-Multicast in DSL access system (IPTV) multimedia content can be transmitted efficiently to many Set top boxes or home gateway devices at one particular time with a very high or any fixed quality representation choice. The content being made available to any home devices, the DASH client should preferably fetch those segments available from the home gateway rather than fetching other representations from the origin server.

In any delivery system involving caches, multimedia content can be transmitted efficiently to many end points at one particular time with a very high or any fixed quality representation choice. The content being made available to any devices down the delivery chain and in particular caches and clients, these caches and client should preferably fetch those segments available from the caches rather than fetching other representations from the origin server.

While the current invention has been described in relation to its preferred embodiments, it is to be understood that this description is for illustrative purposes only. Accordingly, it is intended that the invention be limited only by the scope of the claims appended hereto.

## Claims

1. A method for providing media content to an adaptive HTTP streaming player, the method comprising the steps of :
- receiving a HTTP request from the adaptive HTTP streaming player requesting the media content (S21),
- identifying the media content as content being available on a fixed quality interface (S22),
- determining a representation preference indication of the content provided on the fixed quality interface (S23),
- signaling the representation preference indication to the adaptive HTTP streaming player (S24).

2. The method according to claim 1,
wherein the step of identifying (S22) comprises checking available SDP Session Description Protocol files to find a SDP file corresponding to a media segment being received with the HTTP request.

3. The method according to claim 1,
wherein the step of identifying (S22) comprises assessing a content identifier received in the HTTP request.

4. The method according to one of the claims 1 to 3,
wherein the method comprises further checking whether a provision of the content data over a fixed quality interface is possible.

5. The method according to claim 1,
wherein the step of identifying (S22) comprises determining whether the media content with a fixed quality is available in a cache.

6. The method according to one of the claims 1 to 5,
wherein the step of determining (S23) comprises deriving the representation preference indication from the SDP file.

7. The method according to one of the claims 1 to 5,
wherein the step of determining (S23) comprises deriving the representation preference indication from a MPD Media Presentation Description file.

8. The method according to one of the claims 1 to 7,
wherein the representation preference indication is a digit number or a string representation.

9. The method according to one of the claims 1 to 7,
wherein the representation preference indication is a subset of a number of representations.

10. The method according to one of the claims 1 to 9,
wherein the step of signaling (S24) comprises adding the representation preference indication to a response towards the HTTP streaming player.

11. The method according to claim 1,
wherein the fixed quality interface is a an interface providing data being broadcasted.

12. The method according to claim 1,
wherein the fixed quality interface is a an interface providing data being stored in a cache.

13. A method for providing media content in an adaptive HTTP streaming player, the method comprising the steps of:
- sending a HTTP request (71, 1101) to a HTTP entity for provision the media content (S31),
- receiving (72, 1107) from the HTTP entity a representation preference indication of the media content provided on a fixed quality interface (S32),
- using (1110) the received representation preference indication for requesting media content being provided on the fixed quality interface (S33).

14. The method according to claim 13,
wherein the HTTP request (71, 1101) comprises a request according to a received MPD Media Presentation Description (601) file, wherein the MPD file describes a provision of the media content.

15. The method according to claim 13,
wherein the step of receiving from the HTTP entity a representation preference indication comprises continuously checking of the received representation preference indication.

16. The method according to one of the claims 13 to 15,
wherein the adaptive HTTP streaming player stops to measure any changes in the link quality of the provided data on the unicast interface upon reception of the representation preference indication

17. A HTTP entity device (41) adapted to provide media content to an adaptive HTTP streaming player, comprising
- receiver (46) adapted to receive a HTTP request from the adaptive HTTP streaming player requesting the media content,
- identifier (44) adapted to identify the media content as content being provided on a fixed quality interface (42),
- processor (45) adapted to determine a representation preference indication of the media content provided on the fixed quality interface (42)
- sender (47) adapted to signal the representation preference indication to the adaptive HTTP streaming player.

18. The device according to claim 17
wherein the device comprises further a broadcast interface (708, 807) adapted to receive media segments over broadcast or IP multicast.

19. The device according to claim 17 or 18,
wherein the device comprises further a unicast interface (709, 808) adapted to fetch media content from a unicast web server (610, 704, 804, 904, 1014).

20. The device according to claim 17, 18 or 19,
wherein the device comprises further a cache (605. 703, 803, 903, 1013) adapted to cache data with a fixed data quality.

21. An adaptive HTTP streaming player device (51) adapted to provide media content comprising
- sender (52) adapted to send a HTTP request for provision of media content to a HTTP entity (41),
- receiver (53) adapted to receive a representation preference indication from the HTTP entity (41) for reception of the media content being provided on the fixed quality interface (42),
- processor (54) adapted to use the received representation preference indication for requesting the media content being provided on the fixed quality interface.

22. A client device adapted to provide media content
wherein the client device comprises an adaptive HTTP streaming player device according to claim 17 and a HTTP entity according to claim 21.

23. The client device according to claim 22,
wherein the adaptive HTTP streaming player and the HTTP entity are deployed on the same device.

24. The client device according to claim 22,
wherein the adaptive HTTP streaming player and the HTTP entity are deployed in separate devices.
